# EUROPEAN PATENT APPLICATION

(11) **EP 4 554 249 A1**
(43) Date of publication of application: **14.05.2025**
(21) Application number: 23852743.6
(22) Date of filing: 03.07.2023
(51) Int. Cl.: H04N 23/69, H04N 23/63, H04N 23/45, H04N 23/57

(54) **METHOD FOR PROVIDING IMAGE, AND ELECTRONIC DEVICE SUPPORTING SAME**

(30) Priority: 12.08.2022 KR 20220101551; 26.09.2022 KR 20220121354
(71) Applicant: Samsung Electronics Co., Ltd., Suwon-si, Gyeonggi-do 16677 (KR)
(72) Inventor: BAE, Changsub, Suwon-si Gyeonggi-do 16677 (KR); PARK, Jaehyoung, Suwon-si Gyeonggi-do 16677 (KR); WON, Jonghoon, Suwon-si Gyeonggi-do 16677 (KR); YOO, Hyoungjin, Suwon-si Gyeonggi-do 16677 (KR); LEE, Sungkoo, Suwon-si Gyeonggi-do 16677 (KR); JUNG, Jooyoung, Suwon-si Gyeonggi-do 16677 (KR); HAN, Daejung, Suwon-si Gyeonggi-do 16677 (KR)
(74) Representative: Appleyard Lees IP LLP
(86) International application number: PCT/KR2023/009325
(87) International publication number: WO 2024/034856

(57) **Abstract**

An electronic device according to an embodiment comprises: a first camera; a second camera supporting optical zoom; a display module; and at least one processor operatively connected to the first camera, the second camera, and the display module. The at least one processor can be configured to change, based on a user input, the zoom magnification. The at least one processor can be configured to identify whether the changed zoom magnification falls within a zoom magnification range set to perform optical zoom through the second camera. The at least one processor can be configured to, based on identifying that the changed zoom magnification falls within the zoom magnification range, select, a speed at which the zoom magnification is changed, a camera for acquiring an image between the first camera and the second camera. The at least one processor can be configured to display, through the display module, the image acquired through the selected camera.

## Description

### [Technical Field]

The present disclosure generally relates to a method of providing images and an electronic device supporting the same.

### [Background Art]

An electronic device (e.g., a smartphone) may include multiple cameras to provide enhanced camera functionality. For example, the electronic device may include an ultra-wide-angle camera, a wide-angle camera, a first telephoto camera, and a second telephoto camera, each having a different basic zoom magnification. Each of the multiple cameras included in the electronic device may capture images using digital zoom at zoom magnifications other than the basic zoom magnification.

Recently, in addition to cameras that only support digital zoom, cameras that support continuous optical zoom are being installed in electronic devices. Continuous optical zoom can be a method of capturing images by adjusting the focal length by moving the lens, allowing the subject to be enlarged (or reduced). Since continuous optical zoom changes the degree to which light reflected from the subject is refracted to form a larger image on the camera, images acquired by continuous optical zoom can have higher image quality than images acquired using digital zoom (e.g., images acquired by cropping images obtained through a camera).

### [Detailed Description of the Invention]

### [Technical Problem]

The electronic device can provide an image acquired at a changed zoom magnification based on a user input for changing the zoom magnification.

When the electronic device acquires an image using digital zoom, the electronic device can provide an image acquired at a changed zoom magnification regardless of a speed at which the zoom magnification is changed. For example, in the case of digital zoom, a speed at which the electronic device captures images and a speed at which images are processed according to changes in the zoom magnification can be substantially the same. Accordingly, the electronic device can provide an image acquired at a speed corresponding to the speed at which the zoom magnification is changed even if the speed at which the zoom magnification is changed is greater than or equal to a designated speed.

On the other hand, when the electronic device acquires an image using continuous optical zoom, time may be required to move the lens to a position corresponding to the changed zoom magnification. Accordingly, in a case in which the electronic device acquires an image using continuous optical zoom, it may be difficult to provide an image acquired at the changed zoom magnification according to the speed at which the zoom magnification is changed (e.g., immediately after the zoom magnification is changed) when the speed at which the zoom magnification is changed is greater than or equal to the designated speed.

One embodiment of the present disclosure relates to a method of providing an image, which can acquire an image using continuous optical zoom or digital zoom, based on a speed at which the zoom magnification is changed in a zoom magnification range set to acquire an image using continuous optical zoom, and an electronic device supporting the same.

The technical problems to be achieved by the present disclosure are not limited to the technical problems mentioned above, and other technical problems that are not mentioned can be clearly understood by a person having ordinary skill in the art related to the present document from the description below.

### [Technical Solution]

An electronic device according to one embodiment may include a first camera, a second camera supporting optical zoom, a display module, and at least one processor operatively connected to the first camera, the second camera, and the display module. The at least one processor may be configured to change a zoom magnification based on a user input. The at least one processor may be configured to identify whether the changed zoom magnification falls within a zoom magnification range set to perform an optical zoom through the second camera. The at least one processor may be configured to, based on identifying that the changed zoom magnification falls within the zoom magnification range, select, based on a speed at which the zoom magnification is changed, a camera for acquiring an image between the first camera and the second camera. The at least one processor may be configured to display an image acquired through the selected camera through the display module.

In one embodiment, a method of providing an image by an electronic device may include changing a zoom magnification based on a user input. The method may include identifying whether the changed zoom magnification falls within a zoom magnification range set to perform an optical zoom through the second camera. The method may include based on identifying that the changed zoom magnification falls within the zoom magnification range, selecting, based on a speed at which the zoom magnification is changed, a camera for acquiring an image between the first camera and the second camera. The method may include displaying, through the display module of the electronic device, the image acquired through the selected camera.

In one embodiment, in a non-transitory computer-readable medium having computer-executable instructions recorded thereon, the computer-executable instructions, when executed, may cause an electronic device including at least one processor to change a zoom magnification based on a user input. The computer-executable instructions, when executed, may cause the electronic device including the at least one processor to identify whether the changed zoom magnification falls within a zoom magnification range set to perform an optical zoom through the second camera. The computer-executable instructions, when executed, may cause the electronic device including the at least one processor to, based on identifying that the changed zoom magnification falls within the zoom magnification range, select, based on a speed at which the zoom magnification is changed, a camera for acquiring an image between the first camera and the second camera . The computer-executable instructions, when executed, may cause the electronic device including the at least one processor to display, through the display module of the electronic device, the image acquired through the selected camera.

### [Advantageous Effects]

A method of providing an image according to one embodiment and an electronic device supporting the same can provide an image acquired at a speed corresponding to a speed at which a zoom magnification is changed by acquiring an image using a continuous optical zoom or digital zoom in a zoom magnification range set to acquire an image using the continuous optical zoom based on a speed at which the zoom magnification is changed.

### [Brief Description of Drawings]

FIG. 1 is a block diagram illustrating an electronic device in a network environment according to an embodiment.
FIG. 2 is a block diagram illustrating a camera module according to an embodiment.
FIG. 3 is a block diagram illustrating an electronic device according to an embodiment.
FIG. 4 is a flowchart illustrating a method of providing an image according to an embodiment.
FIG. 5 is an exemplary diagram illustrating a zoom magnification range for performing digital zoom and optical zoom according to an embodiment.
FIG. 6 is a flowchart illustrating a method of selecting a camera for acquiring an image based on a speed at which a zoom magnification is changed according to an embodiment.
FIG. 7 is an exemplary diagram illustrating a method of selecting a camera for acquiring an image based on a speed at which a zoom magnification is changed according to an embodiment.
FIGS. 8A, 8B, and 8C are exemplary diagrams illustrating a method of selecting a camera for acquiring an image based on a speed at which a zoom magnification is changed according to an embodiment.
FIG. 9 is a flowchart illustrating a method of selecting a camera for acquiring an image based on a speed at which a zoom magnification is changed according to an embodiment.
FIG. 10 is a flowchart illustrating a method of selecting a camera based on an exposure value according to an embodiment.
FIG. 11 is an exemplary diagram illustrating a method of selecting a camera based on an exposure value according to an embodiment.
FIG. 12 is a flowchart illustrating a method of selecting a camera based on a distance from a subject according to an embodiment.
FIG. 13 is an exemplary diagram illustrating a method of selecting a camera based on a distance from a subject according to an embodiment.
FIG. 14 is an exemplary diagram illustrating a method of providing an image according to an embodiment.
FIG. 15 is an exemplary diagram illustrating a method of providing an image according to an embodiment.

### [Mode for Carrying out the Invention]

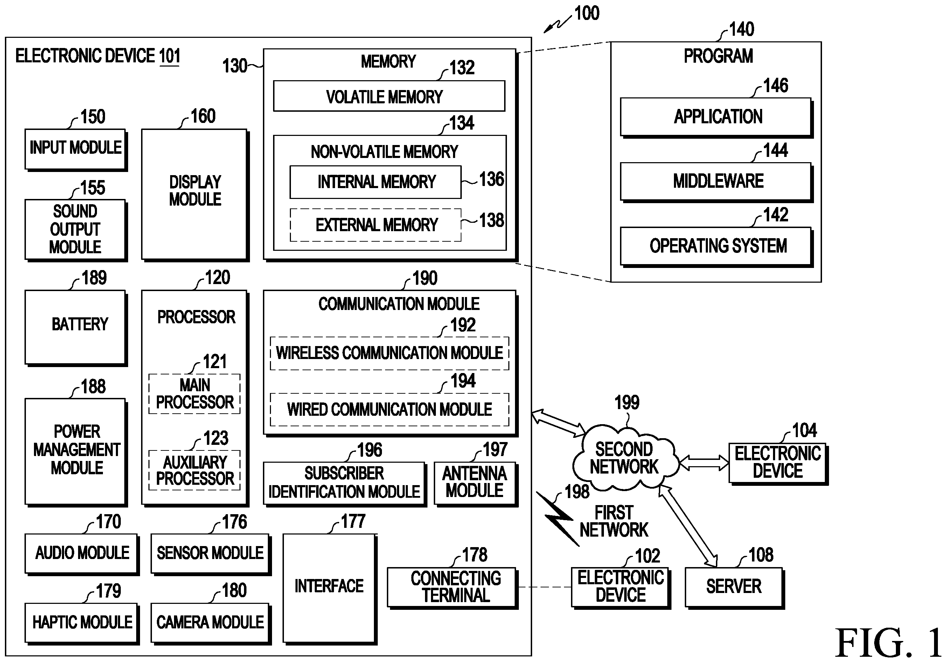

FIG. 1 is a block diagram illustrating an electronic device 101 in a network environment 100 according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

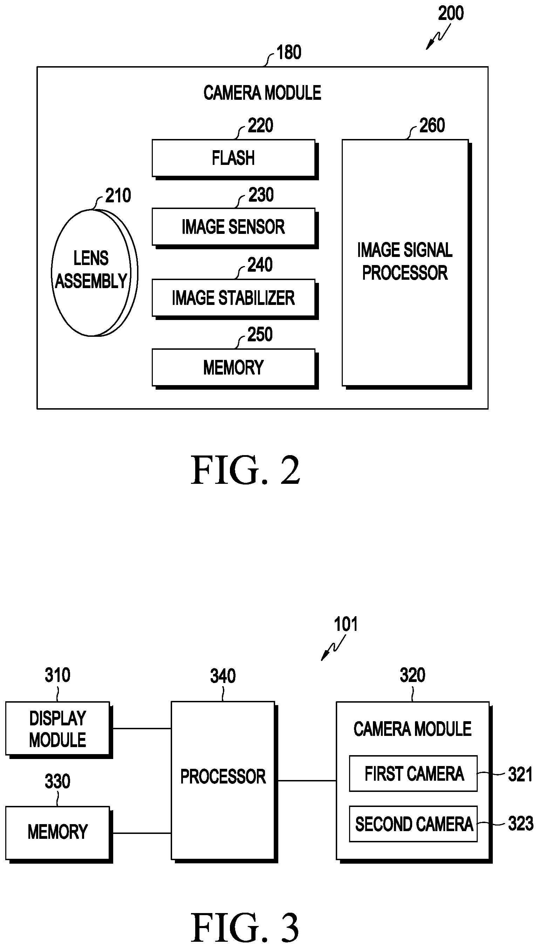

FIG. 2 is a block diagram 200 illustrating the camera module 180 according to various embodiments.

Referring to FIG. 2, the camera module 180 may include a lens assembly 210, a flash 220, an image sensor 230, an image stabilizer 240, a memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display device 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display device 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 160 may be displayed, by the processor 120, via the display device 260 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules180 may form a telephoto camera. Similarly, at least one of the plurality of camera modules 180 may form, for example, a front camera and at least another of the plurality of camera modules 180 may form a rear camera.

FIG. 3 is a block diagram illustrating the electronic device 101 according to an embodiment.

Referring to FIG. 3, in an embodiment, the electronic device 101 may include a display module 310, a camera module 320, a memory 330, and/or a processor 340.

In an embodiment, the display module 310 may be included in the display module 160 of FIG. 1.

In an embodiment, the display module 310 may display an image captured by the camera module 320. For example, the display module 310 may display a dynamic image (e.g., a preview image, a moving image) and/or a still image captured by the camera module 320.

In an embodiment, the camera module 320 may be included in the camera module 180 of FIGS. 1 and 2.

In an embodiment, the camera module 320 may include multiple cameras. For example, the camera module 320 may include a first camera 321 and a second camera 323.

In an embodiment, the first camera 321 may be a camera having a fixed angle of view. In an embodiment, the first camera 321 may include a camera that supports only digital zoom among digital zoom and continuous optical zoom. In an embodiment, the first camera 321 may include at least one camera that supports only digital zoom among digital zoom and continuous optical zoom.

In an embodiment, digital zoom may correspond to a method of acquiring an image through the camera module 320 (e.g., the first camera 321) and then acquiring an image to be displayed through a display by cropping a portion of the acquired image.

In an embodiment, the second camera 323 may be a camera having a changeable angle of view by moving a lens (e.g., the lens assembly 210) according to a change in zoom magnification.

In an embodiment, the second camera 323 may include a camera that supports continuous optical zoom (hereinafter, interchangeably with "optical zoom"). In an embodiment, the second camera 323 may include at least one camera that supports optical zoom.

In an embodiment, the second camera 323 may be a camera that supports optical zoom and digital zoom. For example, the second camera 323 may support optical zoom in a designated zoom magnification range. The second camera 323 may be a camera that supports digital zoom at a zoom magnification exceeding the zoom magnification range that supports optical zoom (e.g., a zoom magnification exceeding a maximum zoom magnification of the zoom magnification range that supports optical zoom).

In an embodiment, the second camera 323 may include a lens that adjusts the focal length of the second camera 323.

In an embodiment, the optical zoom (continuous optical zoom) may refer to a method of moving a lens (e.g., a lens included in the second camera 323) to a position corresponding to a zoom magnification and then acquiring an image by using light passing through the lens at the moved position.

In an embodiment, the second camera 323 may be a camera having a focal length longer than the focal length of the first camera 321.

In an embodiment, the camera module 320 may further include components for moving the position of the lens based on the zoom magnification acquired from the processor 340. For example, the camera module 320 may further include an actuator for moving the position of the lens included in the second camera 323, a controller for controlling the operation of the actuator based on the zoom magnification acquired from the processor 340, and/or a memory (e.g., the memory 250 of FIG. 2) for storing the current position (and moved position) of the lens. However, the components included in the camera module 320 are not limited to the above-described components.

In an embodiment, the memory 330 may be included in the memory 130 of FIG. 1.

In an embodiment, the memory 330 may store information for performing an operation of providing an image. The information stored by the memory 330 will be described later.

In an embodiment, the processor 340 may be included in the processor 120 of FIG. 1.

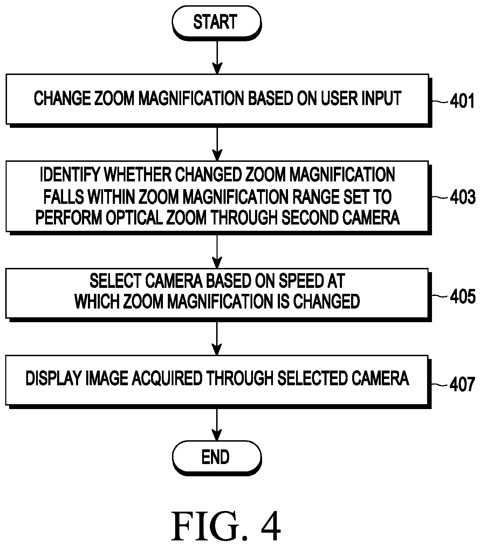

In an embodiment, the processor 340 may control the overall operation for providing an image. In an embodiment, the processor 340 may include one or more processors for providing an image. The operation performed by the processor 340 for providing an image will be described below with reference to FIGS. 4 to 15.

In FIG. 3, the electronic device 101 is illustrated as including the display module 310, the camera module 320, the memory 330, and/or the processor 340, but is not limited thereto. For example, the electronic device 101 may further include at least one component illustrated in FIG. 1.

The electronic device 101 according to an embodiment may include the first camera 321, the second camera 323 supporting an optical zoom, the display module 310, and the at least one processor 340 operatively connected to the first camera 321, the second camera 323, and the display module 310. The at least one processor 340 may be configured to change a zoom magnification based on a user input. The at least one processor 340 may be configured to identify whether the changed zoom magnification falls within a zoom magnification range set to perform optical zoom through the second camera 323. The at least one processor 340 may be configured to, based on identifying that the changed zoom magnification falls within the zoom magnification range, select, based on a speed at which the zoom magnification is changed, a camera for acquiring an image between the first camera 321 and the second camera 323. The at least one processor 340 may be configured to display the image acquired through the selected camera through the display module 310.

In an embodiment, the focal length of the second camera 323 may be longer than the focal length of the first camera 321, and the second camera 323 may include a lens for adjusting the focal length of the second camera.

In an embodiment, the at least one processor 340 may be configured to: identify a speed at which the zoom magnification is changed; identify whether the speed at which the zoom magnification is changed is greater than or equal to a threshold speed for optical zoom of the second camera 323 based on identifying that the changed zoom magnification falls within the zoom magnification range; select the first camera 321 between the first camera 321 and the second camera 323 as a camera for acquiring an image based on identifying that the speed at which the zoom magnification is changed is greater than or equal to the threshold speed; and select the second camera 323 between the first camera 321 and the second camera 323 as the camera for acquiring the image based on identifying that the speed at which the zoom magnification is changed is less than the threshold speed.

In an embodiment, the threshold speed for an optical zoom of the second camera 323 may be determined based on the movement speed of the lens.

In an embodiment, the at least one processor 340 may be configured to change the camera for acquiring the image from the first camera 321 to the second camera 323 to perform optical zoom through the second camera 323 when the lens is moved to a position corresponding to the changed zoom magnification while performing digital zoom through the first camera 321 at the changed zoom magnification.

In an embodiment, the at least one processor 340 may be configured to change the camera for acquiring the image from the first camera 321 to the second camera 323 when the lens is moved to the position corresponding to the changed zoom magnification and the changed zoom magnification is maintained for a designated time while performing digital zoom through the first camera 321 at the changed zoom magnification.

In an embodiment, the at least one processor 340 may be configured to: determine a first time required for the second camera 323 to perform the optical zoom based on the speed at which the zoom magnification is changed, based on the identification that the changed zoom magnification falls within the zoom magnification range; identify whether the first time exceeds a period designated to display one image through the display module 310; select the first camera 321 between the first camera 321 and the second camera 323 as the camera for acquiring the image based on the identification that the first time exceeds the period; and select the second camera 323 between the first camera 321 and the second camera 323 as the camera for acquiring the image based on the identification that the first time is less than or equal to the period.

In an embodiment, the at least one processor 340 may be configured to acquire an exposure value, and select the first camera 321 between the first camera 321 and the second camera 323 as the camera for acquiring the image when the exposure value is less than or equal to a designated exposure value.

In an embodiment, the at least one processor 340 may be configured to acquire a distance between the electronic device 101 and the subject, and select the first camera 321 between the first camera 321 and the second camera 323 as the camera for acquiring the image when the distance is less than or equal to a minimum focal length of the lens of the second camera 323.

In an embodiment, the at least one processor 340 may be configured to acquire a first image by cropping an image acquired through the first camera 321 when the first camera 321 is selected between the first camera 321 and the second camera 323, and to acquire a second image by performing the optical zoom through the second camera 323 when the second camera 323 is selected between the first camera 321 and the second camera 323.

FIG. 4 is a flowchart 400 illustrating a method of providing an image according to an embodiment.

Referring to FIG. 4, in operation 401, in an embodiment, the processor 340 may change a zoom magnification based on a user input.

In an embodiment, the processor 340 may display a screen including an object for changing (e.g., setting) a zoom magnification through the display module 310 while a camera application is executed (e.g., while a preview is displayed). The processor 340 may, based on a user input for the object, maintain the zoom magnification at a default zoom magnification (e.g., 1 times (1x)), increase the zoom magnification (e.g., change the zoom magnification of the camera module 320 to 2 times (2x)), or decrease the zoom magnification (e.g., change the zoom magnification of the camera module 320 to 0.5 times (0.5x)).

In an embodiment, the processor 340 may change the zoom magnification based on a pinch input to the display module 310 while the preview is displayed. For example, the processor 340 may increase the zoom magnification based on a pinch-out input to the display module 310 while the preview is displayed, and decrease the zoom magnification based on a pinch-in input to the display module 310.

However, the method of changing the zoom magnification based on the user input is not limited to the above-described examples. In addition, although the above-described examples illustrate changing the zoom magnification based on the user input, it is not limited thereto. For example, the processor 340 may change the zoom magnification based on a designated input other than the user input (e.g., a distance between the camera module 320 and the subject, an input received from an external electronic device).

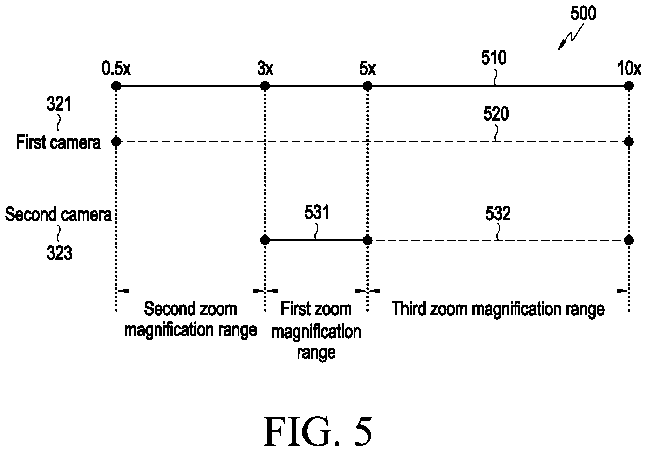

In operation 403, in an embodiment, the processor 340 may identify whether the changed zoom magnification falls within a zoom magnification range set to perform an optical zoom (continuous optical zoom) through the second camera 323. Hereinafter, with reference to FIG. 5, an operation of identifying whether the changed zoom magnification falls within the zoom magnification range set to perform optical zoom through the second camera 323 will be described in detail.

FIG. 5 is an exemplary diagram 500 illustrating a zoom magnification range for performing digital zoom and optical zoom according to an embodiment.

Referring to FIG. 5, in an embodiment, a line 510 may represent a zoom magnification range that can be changed (e.g., set) through the first camera 321 and the second camera 323. For example, the zoom magnification range that can be changed through the first camera 321 and the second camera 323 may include 0.5 times (0.5x) to 10 times (10x), as in the line 510. However, the zoom ratio range represented by the line 510 is only an example, and the zoom magnification range that can be changed through the first camera 321 and the second camera 323 is not limited to 0.5 times (0.5x) to 10 times (10x).

In an embodiment, in FIG. 5, the line 520 may represent the zoom magnification range in which the processor 340 performs digital zoom through the first camera 321. For example, the processor 340 may be set to perform digital zoom through the first camera 321, as in the line 520, in a second zoom magnification range (e.g., a zoom magnification range exceeding 0.5 times (0.5x) and less than 3 times (3x)) (hereinafter referred to as the "second zoom magnification range"), a first zoom magnification range (e.g., a zoom magnification range of 3 times (3x) or more and 5 times (5x) or less) (hereinafter referred to as the "first zoom magnification range"), and a third zoom magnification range (e.g., a zoom magnification range exceeding 5 times (5x) and less than 10 times (10x)) (hereinafter referred to as the "third zoom magnification range").

In an embodiment, in FIG. 5, a line 531 may represent the first zoom magnification range in which the processor 340 performs optical zoom through the second camera 323, and a line 532 may represent a zoom magnification range (e.g., the third zoom magnification range) in which the processor 340 performs digital zoom through the second camera 323.

In an embodiment, the processor 340 may be configured to perform an optical zoom through the second camera 323 in the first zoom magnification range (e.g., a zoom magnification range of 3 times (3x) or more and 5 times (5x) or less).

In an embodiment, the processor 340 may be set to perform digital zoom through the second camera 323 in the third zoom magnification range (e.g., a zoom magnification range exceeding 5 times (5x) and less than or equal to 10 times (10x)). For example, the processor 340 may be configured to acquire an image to be displayed through the display module 310 by cropping a portion of an image acquired at 5x as the maximum zoom magnification of the third zoom magnification range through the second camera 323 when the zoom magnification exceeds the third zoom ratio range (e.g., 5 times (5x) as the maximum zoom magnification of the third zoom magnification range).

In an embodiment, the processor 340 may identify whether the changed zoom magnification falls within the first zoom magnification range set to perform optical zoom through the second camera 323.

Referring back to FIG. 4, in operation 405, in an embodiment, based on identifying that the changed zoom magnification falls within the zoom magnification range (the first zoom magnification range) set to perform optical zoom through the second camera 323, the processor 340 may select, based on the speed at which the zoom magnification is changed, a camera for acquiring an image between the first camera 321 and the second camera 323,.

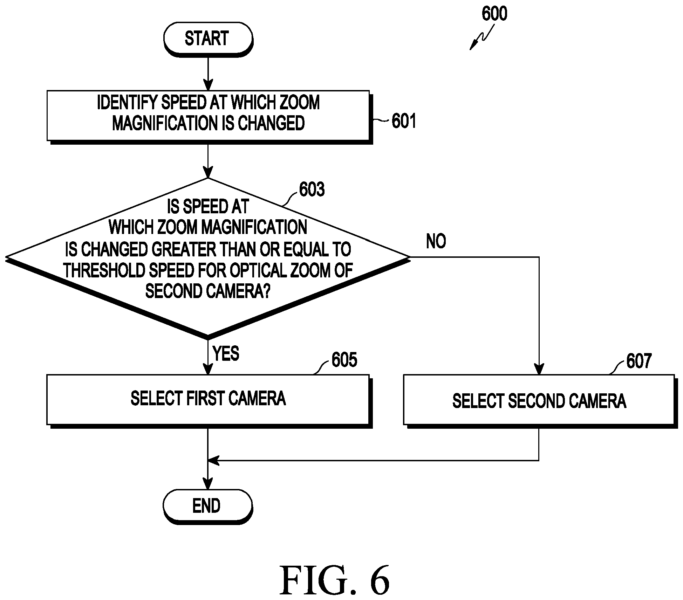

Hereinafter, with reference to FIGS. 6 to 9, a method of selecting a camera for acquiring an image between the first camera 321 and the second camera 323 based on a speed at which the zoom magnification is changed will be described in detail.

FIG. 6 is a flowchart 600 illustrating a method of selecting a camera for acquiring an image based on a speed at which a zoom magnification is changed according to an embodiment.

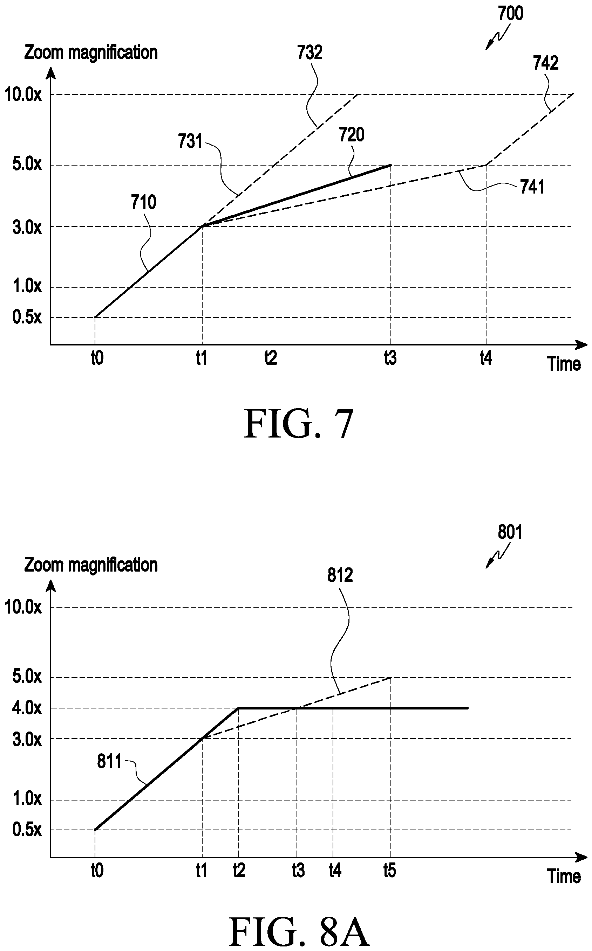

FIG. 7 is an exemplary diagram 700 illustrating a method of selecting a camera for acquiring an image based on a speed at which a zoom magnification is changed according to an embodiment.

FIGS. 8A to 8C are exemplary diagrams 801, 802, and 803 illustrating a method of selecting a camera for acquiring an image based on a speed at which a zoom magnification is changed according to an embodiment.

Referring to FIGS. 6 to 8C, in operation 601, in an embodiment, the processor 340 may identify the speed at which the zoom magnification is changed.

In an embodiment, the speed at which the zoom magnification is changed may refer to a value obtained by dividing the amount of the zoom magnification changed while a user input for changing the zoom magnification is received, by the time when the user input for changing the zoom magnification is received.

In an embodiment, the speed at which the zoom magnification is changed may refer to the amount of the zoom magnification changed per unit time (per second) while the zoom magnification is changed by the user input.

In an embodiment, the processor 340 may identify the speed at which the zoom magnification is changed (or the zoom magnification is being changed) based on identifying that the changed zoom magnification falls within the zoom magnification range set to perform optical zoom through the second camera 323.

In operation 603, in an embodiment, the processor 340 may identify whether the speed at which the zoom magnification is changed is greater than or equal to a threshold speed for the optical zoom of the second camera 323.

In an embodiment, the threshold speed for optical zoom of the second camera 323 may refer to the amount of zoom magnification that can be changed per unit time when performing optical zoom using the second camera 323. For example, the threshold speed for optical zoom of the second camera 323 may refer to the maximum amount (or limited amount) of zoom magnification that can be changed per unit time, determined based on the movement speed of the lens (e.g., the maximum speed at which the lens can be moved) when performing optical zoom using the second camera 323.

In an embodiment, the threshold speed for optical zoom of the second camera 323 may refer to a value which is, when an optical zoom using the second camera 323 is performed, obtained by dividing the size of the zoom magnification range set to perform optical zoom through the second camera 323 by the time required to change the position of the lens from the position of the lens corresponding to the minimum zoom magnification of the zoom magnification range to the position of the lens corresponding to the maximum zoom magnification. For example, when the zoom magnification range set to perform optical zoom through the second camera 323 is 3x or more and 5x or less, the threshold speed for the optical zoom of the second camera 323 may be a value obtained by dividing 2x (e.g., a value obtained by subtracting 3x from 5x) the size of the zoom magnification range of 3 times (3x) or more and 5 times (5x) or less by the time required to move the lens position from the lens position corresponding to 3 times (3x) the zoom magnification to the lens position corresponding to 5 times (5x) the zoom magnification.

In an embodiment, the threshold speed for optical zoom of the second camera 323 may be determined based on the moving speed of the lens of the second camera 323. In an embodiment, the lens of the second camera 323 may be a lens that adjusts the focal length of the second camera 323.

Based on identifying that the speed at which the zoom magnification is changed is greater than or equal to the threshold speed for optical zoom of the second camera 323 in operation 603, in an embodiment, in operation 605, the processor 340 may select the first camera 321 as the camera for acquiring an image between the first camera 321 and the second camera 323. For example, the processor 340 may select the first camera 321 between the first camera 321 and the second camera 323 in order to perform digital zoom through the first camera 321.

Based on identifying that the speed at which the zoom magnification is changed is less than the threshold speed for optical zoom of the second camera 323 in operation 603, in operation 607, in an embodiment, the processor 340 may select the second camera 323 as the camera for acquiring an image between the first camera 321 and the second camera 323. For example, the processor 340 may select the second camera 323 between the first camera 321 and the second camera 323 to perform optical zoom through the second camera 323.

In an embodiment, in FIG. 7, a line 710 may represent a zoom magnification that is changed in a second zoom magnification range (e.g., a zoom magnification range of 0.5 times (0.5x) or more and less than 3 times (3x) or less) set to perform a digital zoom through the first camera 321 based on a user input received from the time (t=t0) to the time (t=t1). In an embodiment, a slope of the line 710 may represent a speed at which the zoom magnification is changed in the second zoom magnification range.

In an embodiment, in FIG. 7, a line 720 may represent a zoom magnification that is changed in a first zoom magnification range (e.g., a zoom magnification range of 3 times (3x) or more and 5 times (5x) or less) set to perform optical zoom through the second camera 323 during a time period from the time (t=t1) to the time (t=t3). In an embodiment, a slope of the line 720 may represent a threshold speed for optical zoom of the second camera 323.

In an embodiment, in FIG. 7, the processor 340 may select the first camera 321 as the camera for acquiring an image while the zoom magnification is changed from 3 times (3x) to 5 times (5x) based on a user input received from the time (t=t1) to the time (t=t2), as in the line 731. For example, when the processor 340 changes the zoom magnification from 3x to 5x based on the user input received from the time (t=t1) to the time (t=t2), as in the line 731, while the zoom magnification is being changed, the processor 340 may identify that the speed at which the zoom magnification is changed (e.g., the slope of the line 731) during a time period from the time (t=t1) to the time (t=t2) is greater than or equal to the threshold speed for the optical zoom of the second camera 323 (e.g., the slope of the line 720). The processor 340 may select the first camera 321 as the camera for acquiring the image based on the identification that the speed at which the zoom magnification is changed during the time period from the time (t=t1) to the time (t=t2) is greater than or equal to the threshold speed for the optical zoom of the second camera 323. In an embodiment, the processor 340 may select the first camera 321 as the camera for acquiring the image (e.g., a preview image) to perform digital zoom through the first camera 321 when increasing the zoom magnification in a third zoom magnification range (e.g., a zoom magnification range greater than 5 times (5x) and less than or equal to 10 times (10x)) after the time (t=t2), as in the line 732.

In an embodiment, in FIG. 7, the processor 340 may select the second camera 323 as the camera for acquiring the image while the zoom magnification is changed from 3 times (3x) to 5 times (5x) based on the user input received from the time (t=t1) to the time (t=t4), such as a line 741. For example, when the zoom magnification is changed from 3 times (3x) to 5 times (5x) based on the user input received from the time (t=t1) to the time (t=t4), as in the line 741, the processor 340 may identify that the speed (e.g., the slope of the line 741) at which the zoom magnification is changed during a time period from the time (t=t1) to the time (t=t4) is less than the threshold speed (e.g., the slope of the line 720) for the optical zoom of the second camera 323 while the zoom magnification is being changed. The processor 340 may select the second camera 323 as the camera for acquiring the image, based on identifying that the speed at which the zoom magnification is changed during the time period from the time (t=t1) to the time (t=t4) is less than the threshold speed for the optical zoom of the second camera 323. In an embodiment, the processor 340 may select the second camera 323 as the camera for acquiring the image in order to perform digital zoom through the second camera 323 when the zoom magnification increases in the third zoom magnification range after the time (t=t4), as in the line 742.

In an embodiment, the processor 340 may determine to perform digital zoom through the first camera 321 without performing optical zoom through the second camera 323 when a designated condition is satisfied, in order to prevent the camera for acquiring the image from being changed frequently. In this regard, the following description will be made with reference to FIGS. 8A to 8C.

In an embodiment, in FIG. 8A, a line 811 may represent a zoom magnification that is changed based on a user input. The slope of the line 811 may represent a speed at which the zoom magnification is changed.

In an embodiment, in FIG. 8A, a line 812 may represent a zoom magnification that is changed in a first zoom magnification range set to perform optical zoom through the second camera 323 during a time period from the time (t=t1) to the time (t=t5). The slope of the line 812 may represent a threshold speed for optical zoom of the second camera 323.

In an embodiment, in FIG. 8A, the processor 340 may determine to perform digital zoom through the first camera 321 during a time period from the time (t=t0) to the time (t=t1) when the zoom magnification is changed in the second zoom magnification range. The processor 340 may determine to perform digital zoom through the first camera 321 when the zoom magnification is changed within the first zoom magnification range during the time period from the time (t=t1) to the time (t=t2).

In an embodiment, the processor 340 may perform an operation of activating the second camera 323 from the time (t=t1) when the zoom magnification is changed in the first zoom magnification range during the time period from the time (t=t1) to the time (t=t2), and moving the lens of the second camera 323 to a position corresponding to the changed zoom magnification (e.g., 4 times 4x). Based on the zoom magnification being maintained at 4 times (4x) the zoom magnification, such as the portion after the time (t=t2) in the line 811, the lens of the second camera 323 may start moving at the time (t=t1) and be positioned at a position corresponding to 4 times (4x) the zoom magnification at the time (t=t3). In an embodiment, the processor 340 may, while performing digital zoom through the first camera 321 at the zoom magnification within the first zoom magnification range, change the camera for acquiring the image from the first camera 321 to the second camera 323 in order to perform optical zoom through the second camera 323 when the second camera 323 becomes a state capable of performing optical zoom through the second camera 323. For example, in FIG. 8A, the processor may change the camera for acquiring the image from the first camera 321 to the second camera 323 to perform optical zoom through the second camera 323 when the zoom magnification is maintained at 4 times (4x) the zoom magnification after the time (t=t2) and the lens of the second camera 323 starts moving at the time (t=t1) and is positioned at the position corresponding to 4 times (4x) the zoom magnification at the time (t=t3).

In an embodiment, the processor 340 may not immediately (e.g., at the time (t=t3)) change the camera for acquiring the image from the first camera 321 to the second camera 323 even if the lens of the second camera 323 is moved to the position corresponding to the changed zoom magnification (e.g., 4 times (4x)).

In an embodiment, the processor 340 may change the camera for acquiring the image from the first camera 321 to the second camera 323 when a designated condition is satisfied after the lens of the second camera 323 is moved to the position corresponding to the changed zoom magnification. For example, in FIG. 8A, after the lens of the second camera 323 is moved to the position corresponding to the changed zoom magnification at the time (t=t3), when the zoom magnification is maintained without being changed (or when the speed at which the zoom magnification is changed is less than the threshold speed for the optical zoom of the second camera 323) during a time period for acquiring a designated number of images (e.g., image frames) (e.g., during a time period between the time (t=t3) and the time (t=t4)).

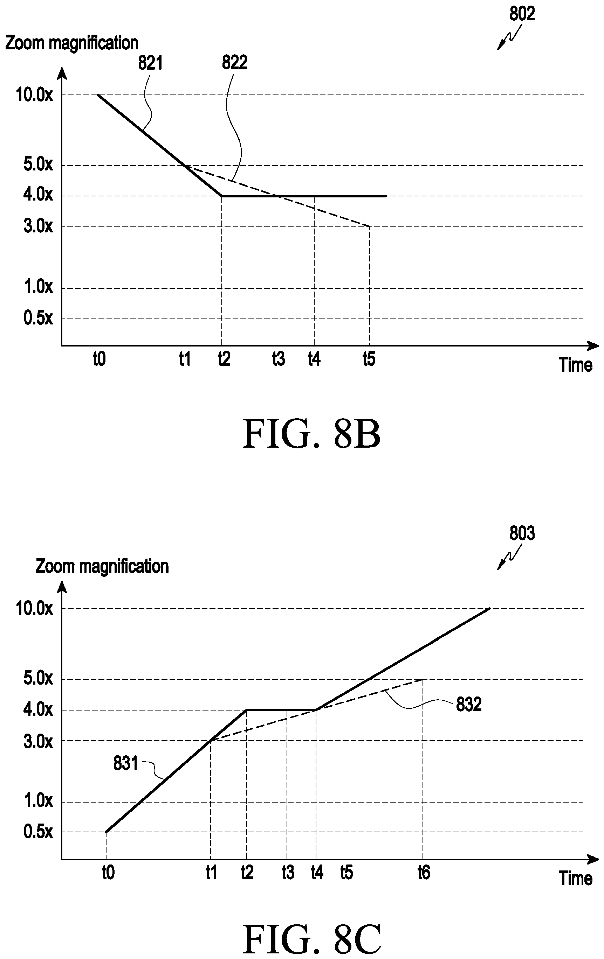

In an embodiment, in FIG. 8B, a line 821 may represent a zoom magnification that is changed based on a user input. The slope of the line 821 may represent the speed at which the zoom magnification is changed.

In an embodiment, in FIG. 8B, a line 822 may represent a zoom magnification that is changed in a first zoom magnification range set to perform optical zoom through the second camera 323 during a time period from the time (t=t1) to the time (t=t5). The slope of the line 822 may represent a threshold speed for optical zoom of the second camera 323.

In an embodiment, in FIG. 8B, the processor 340 may determine to perform digital zoom through the second camera 323 when the zoom magnification is changed (e.g., decreases) in a third zoom magnification range during the time period from the time (t=t0) to the time (t=t1). For example, when the zoom magnification is changed in the third zoom magnification range during the time period from the time (t=t0) to the time (t=t1), the processor 340 may determine to perform digital zoom through the second camera 323 in which the lens of the second camera 323 is at a position corresponding to 5 times (5x) the zoom magnification. The processor 340 may determine to perform digital zoom through the first camera 321 when the zoom magnification is changed (e.g., decreases) in the first zoom magnification range during the time period from the time (t=t1) to the time (t=t2). For example, the processor 340 may not be able to perform digital zoom through the second camera 323 using the lens positioned at a position corresponding to 5 times (5x) the zoom magnification because the angle of view corresponding to the zoom magnification within the first zoom magnification range is larger than the angle of view of the second camera 323 using the lens positioned at the position corresponding to 5 times (5x) the zoom magnification. Accordingly, the processor 340 may determine to perform digital zoom through the first camera 321 rather than the second camera 323 when the zoom magnification is changed in the first zoom magnification range during the time period from the time (t=t1) to the time (t=t2).

In an embodiment, when the zoom magnification is changed in the first zoom magnification range from the time (t=t1) to the time (t=t2), the processor 340 may perform an operation of moving the lens of the second camera 323 to a position corresponding to the changed zoom magnification (e.g., 4 times (4x)) from the time (t=t1) when the zoom magnification becomes the maximum zoom magnification (e.g., 5 times (5x)) of the first zoom magnification range. When the zoom magnification is maintained at 4 times (4x) the zoom magnification, such as the portion after the time (t=t2) in the line 821, the lens of the second camera 323 may start moving at the time (t=t1) and be positioned at a position corresponding to 4x the zoom magnification at the time (t=t3).

In an embodiment, the processor 340 may change the camera for acquiring the image from the first camera 321 to the second camera 323 in order to perform optical zoom through the second camera 323 when the second camera 323 becomes a state capable of performing optical zoom through the second camera 323 while performing digital zoom through the first camera 321 at the zoom magnification within the first zoom magnification range. For example, in FIG. 8B, when the zoom magnification is maintained at 4 times the zoom magnification after the time (t=t2), and the lens of the second camera 323 starts moving at the time (t=t1) and is positioned at a position corresponding to 4x the zoom magnification at the time (t=t3), the processor may change the camera for acquiring the image from the first camera 321 to the second camera 323 in order to perform optical zoom through the second camera 323.

In an embodiment, the processor 340 may not immediately (e.g., at the time (t=t3)) change the camera for acquiring the image from the first camera 321 to the second camera 323 even if the lens of the second camera 323 is moved to the position corresponding to the changed zoom magnification.

In an embodiment, when the lens of the second camera 323 is moved to the position corresponding to the changed zoom magnification and a specified condition is satisfied, the processor 340 may change the camera for acquiring the image from the first camera 321 to the second camera 323. For example, in FIG. 8B, during a time period to acquire a designated number of images (e.g., image frames) (e.g., during a time period between the time (t=t3) and the time (t=t4)) after the lens of the second camera 323 is moved to the position corresponding to the changed zoom magnification at the time (t=t3), when the zoom magnification is maintained without being changed (or the speed at which the zoom magnification is changed is less than the threshold speed for optical zoom of the second camera 323), the processor 340 may change the camera for acquiring the image from the first camera 321 to the second camera 323 to perform optical zoom through the second camera 323.

In an embodiment, in FIG. 8C, a line 831 may represent a zoom magnification that is changed based on a user input. The slope of the line 831 may represent a speed at which the zoom magnification is changed.

In an embodiment, in FIG. 8C, a line 832 may represent a zoom magnification that is changed in the first zoom magnification range set to perform optical zoom through the second camera 323 during a time period from the time (t=t1) to the time (t=t6). The slope of the line 832 may represent a threshold speed for optical zoom of the second camera 323.

In an embodiment, in FIG. 8C, when the zoom magnification is changed in the second zoom magnification range from the time (t=t0) to the time (t=t1), the processor 340 may determine to perform digital zoom through the first camera 321. When the zoom magnification is changed in the first zoom magnification range from the time (t=t1) to the time (t=t2), the processor 340 may determine to perform digital zoom through the first camera 321. The processor 340 may determine to perform digital zoom through the first camera 321 while the zoom magnification is maintained in the first zoom magnification range from the time (t=t2) to the time (t=t3).

In an embodiment, when the zoom magnification is changed in the first zoom magnification range during the time period from the time (t=t1) to the time (t=t2), the processor 340 may perform an operation of activating the second camera (323) from the time (t=t1) when the zoom magnification becomes the minimum zoom magnification (e.g., 3 times (3x)) of the first zoom magnification range, and moving the lens of the second camera 323 to the position corresponding to the changed zoom magnification (e.g., 4 times (4x)). In the line 831, when the zoom magnification is maintained at 4 times (4x) the zoom magnification during the time period from the time (t=t2) to the time (t=t4), the lens of the second camera 323 may start moving at the time (t=t1) and be positioned at the position corresponding to 4 times (4x) the zoom magnification at the time (t=t4).

In an embodiment, when the second camera 323 becomes a state capable of performing optical zoom through the second camera 323 while performing digital zoom through the first camera 321 at the zoom magnification within the first zoom magnification range, the processor 340 may change the camera for acquiring the image from the first camera 321 to the second camera 323 in order to perform optical zoom through the second camera 323. For example, in FIG. 8C, when the zoom magnification is maintained at 4 times (4x) the zoom magnification after the time (t=t2), and the lens of the second camera 323 starts moving at the time (t=t1) and is positioned at the position corresponding to 4 times (4x) the zoom magnification at the time (t=t3), the processor may change the camera for acquiring the image from the first camera 321 to the second camera 323 in order to perform optical zoom through the second camera 323.

In an embodiment, the processor 340 may not immediately (e.g., at the time (t=t3)) change the camera for acquiring the image from the first camera 321 to the second camera 323 even if the lens of the second camera 323 is moved to the position corresponding to the changed zoom magnification.

In an embodiment, when the lens of the second camera 323 is moved to the position corresponding to the changed zoom magnification and a designated condition is satisfied, the processor 340 may change the camera for acquiring the image from the first camera 321 to the second camera 323. For example, in FIG. 8C, when the zoom magnification is maintained without being changed (or the speed at which the zoom magnification is changed is less than the threshold speed for optical zoom of the second camera 323 during the time period (e.g., a time period between the time (t=t4) and the time (t=t5)) to acquire a designated number of images (e.g., image frames) after the lens of the second camera 323 is moved to the position corresponding to the changed zoom magnification at the time (t=t4), the processor 340 may change the camera for acquiring the image from the first camera 321 to the second camera 323 to perform optical zoom through the second camera 323. For example, in FIG. 8C, after the lens of the second camera 323 is moved to the position corresponding to the changed zoom magnification at the time (t=t3), when the zoom magnification is changed at a speed faster than the threshold speed for the optical zoom of the second camera 323 before the time for acquiring the designated number of images (e.g., image frames) has elapsed (e.g., at the time (t=t4) before the time (t=t5)), the processor 340 may maintain the first camera 321 without changing the camera for acquiring the image from the first camera 321 to the second camera 323 in order to perform digital zoom through the first camera 321.

In an embodiment, as described above, in order to prevent the camera for acquiring the image from being frequently changed, when the designated condition is satisfied, it is possible to determine to perform digital zoom through the first camera 321 without performing digital zoom through the second camera 323, thereby preventing current consumption and heat generation.

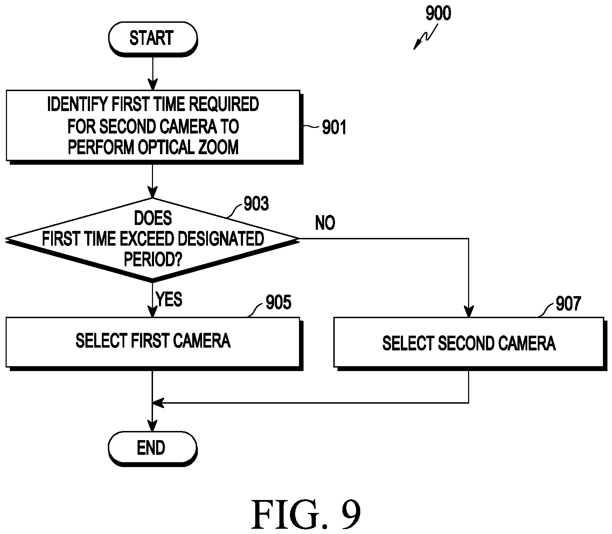

FIG. 9 is a flowchart 900 illustrating a method of selecting a camera for acquiring an image based on a speed at which a zoom magnification is changed according to an embodiment.

Referring to FIG. 9, in operation 901, in an embodiment, the processor 340 may identify a first time required for the second camera 323 to perform optical zoom based on a speed at which a zoom magnification is changed, based on identifying that the changed zoom magnification is within a zoom magnification range set to perform optical zoom through the second camera 323.

In an embodiment, the processor 340 may continuously identify the current position of the lens of the second camera 323 when the zoom magnification is changed in the zoom magnification range (the first zoom magnification range) set to perform optical zoom through the second camera 323. The amount by which the zoom magnification is changed may vary depending on the speed at which the zoom magnification is changed. For example, when the speed at which the zoom magnification is changed is a first speed that is faster than a second speed, the amount of the zoom magnification that is changed at the first speed may be greater than the amount of the zoom magnification that is changed at the second speed. The faster the zoom magnification is changed, the greater the distance by which the lens of the second camera 323 is moved. The processor 340 may determine a position to which the lens of the second camera 323 is to be moved based on the speed at which the zoom magnification is changed (and the time at which the user input for changing the zoom magnification is received) (or the changed zoom magnification) while the zoom magnification is changed. The processor 340 may identify (e.g., calculate) a first time required for the lens of the second camera 323 to move from the current position to the position corresponding to the changed zoom magnification, based on the current position of the lens of the second camera 323, a position to which the lens of the second camera 323 is to be moved by the changed zoom magnification, and the movement speed of the lens of the second camera 323.

In operation 903, in an embodiment, the processor 340 may identify whether the first time required for the second camera 323 to perform optical zoom exceeds a designated period.

In an embodiment, a designated period (hereinafter referred to as the "designated period") may include a period designated to display one image through the display module 310. For example, the processor 340 may designate the period for displaying one image through the display module 310 when multiple images are acquired continuously through the camera module 320. For example, the processor 340 may determine a period stored in the memory 330 when the period for displaying one image through the display module 310 is stored in the memory 330 or when multiple images are acquired continuously through the camera module 320.

In an embodiment, the processor 340 may designate the period (and store the period in the memory 330) for displaying one image through the display module 310 differently from the period for acquiring the image through the camera module 320 for each function performed through a camera application. For example, when displaying a preview using the camera application, the processor 340 may acquire an image at a period of 1/30 (seconds) (e.g., acquire an image at 30 fps (frame per second)) and designate a period in which the acquired image is displayed through the display module 310, as 1/30 (seconds). For example, when a function of capturing a short moment as a slower-than-reality video (also referred to as a "super slow motion function") using a camera application is executed, the processor 340 may acquire images at a period of 1/960 (seconds) (e.g., acquire images at 960 fps) and designate a period in which the acquired image is to be displayed through the display module 310 as 1/30 (seconds). However, it is not limited thereto, and in an embodiment, the processor 340 may designate a period for displaying one image through the display module 310 (and store the period in memory 330) regardless of the period for acquiring the image through the camera module 320 for each function performed through the camera application.

Based on identifying that the first time required for the second camera 323 to perform optical zoom exceeds the designated period in operation 903, in an embodiment, in operation 905, the processor 340 may select the first camera 321 between the first camera 321 and the second camera 323. For example, the processor 340 may select the first camera 321 as the camera for acquiring an image to perform digital zoom through the first camera 321 when the first time required for the second camera 323 to perform an optical zoom exceeds the designated period.

Based on identifying that the first time required for the second camera 323 to perform the optical zoom is less than or equal to the designated period in operation 903, in an embodiment, in operation 907, the processor 340 may select the second camera 323 between the first camera 321 and the second camera 323. For example, the processor 340 may select the second camera 323 as the camera for acquiring an image to perform the optical zoom through the second camera 323 when the first time required for the second camera 323 to perform the optical zoom is less than or equal to the designated period.

Referring back to FIG. 4, in operation 407, in an embodiment, the processor 340 may display the image acquired through the selected camera through the display module 310.

In an embodiment, the processor 340 may perform a digital zoom through the first camera 321 when the first camera 321 is selected as the camera for acquiring the image through operation 405. For example, the processor 340 may acquire the image through the first camera 321 and then crop the acquired image based on the changed zoom magnification to acquire an image (hereinafter referred to as a "first image") to be displayed through the display module 310. The processor 340 may display the acquired first image through the display module 310.

In an embodiment, the processor 340 may perform an optical zoom through the second camera 323 when the second camera 323 is selected as the camera for acquiring the image through operation 405. For example, the processor 340 may acquire the image (hereinafter referred to as a "second image") through the second camera 323 after the lens of the second camera 323 is moved to a position corresponding to the changed zoom magnification. For example, the processor 340 may acquire a second image (e.g., a preview image) through the second camera 323 at a designated period. The processor 340 may display the acquired second image through the display module 310.

In an embodiment, the first image and/or the second image may be a dynamic image (e.g., a preview, a video) or a static image.

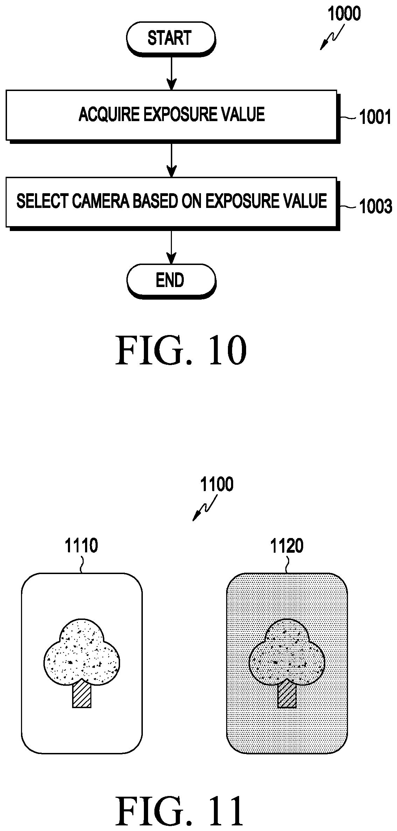

FIG. 10 is a flowchart 100 illustrating a method of selecting a camera based on an exposure value according to an embodiment.

FIG. 11 is an exemplary diagram 1100 illustrating a method of selecting a camera based on an exposure value according to an embodiment.

In an embodiment, the operation of selecting a camera based on the exposure value of FIG. 10 and FIG. 11 may be an operation included in the operation of selecting a camera based on the speed at which the zoom magnification of operation 405 of FIG. 4 is changed.

Referring to FIGS. 10 and 11, in operation 1001, in an embodiment, the processor 340 may acquire an exposure value (EV) of the camera module 320. For example, the processor 340 may acquire the exposure value of the camera module 320 by using various metering methods (e.g., average metering method, spot metering method, center-weighted metering method). For example, the processor 340 may acquire (or measure) information on the brightness around the electronic device 101. The processor 340 may acquire (or determine) the exposure value of the camera module 320 based on the information on the brightness around the electronic device 101.

In operation 1003, in an embodiment, the processor 340 may select a camera for acquiring the image among the first camera 321 and the second camera 323 based on the exposure value.

In an embodiment, the processor 340 may select the first camera 321 having a shorter focal length than the focal length of the second camera 323 as the camera for acquiring the image based on the identification that the acquired exposure value is less than or equal to the designated exposure value. In an embodiment, when the acquired exposure value is lower than or equal to the designated exposure value, it may be the case that the environment surrounding the electronic device 101 is a low-light environment. The processor 340 may acquire the image through the first camera 321 having a shorter focal length than the focal length of the second camera 323 in the low-light environment, thereby providing an image having a higher image quality than the image acquired through the second camera 323 in the low-light environment.

In an embodiment, even if the changed zoom magnification falls within the first zoom magnification range set to perform optical zoom through the second camera 323 and the speed at which the zoom magnification is changed is less than a designated threshold speed, the processor 340 may select the first camera 321 between the first camera 321 and the second camera 323 as the camera for acquiring the image based on the identification that the acquired exposure value is less than or equal to the designated exposure value.

In an embodiment, the processor 340 may perform an operation of selecting the camera based on the speed at which the zoom magnification of operation 405 of FIG. 4 is changed based on whether the acquired exposure value exceeds the designated exposure value. For example, the processor 340 may select the camera for acquiring the image between the first camera 321 and the second camera 323 based on the zoom magnification range to which the changed zoom magnification belongs and/or the speed at which the zoom magnification is changed when the acquired exposure value exceeds the designated exposure value.

In an embodiment, in FIG. 11, an image 1110 may be an image acquired when the acquired exposure value exceeds a designated exposure value (e.g., not in the low-light environment), and an image 1120 may be an image acquired when the acquired exposure value is less than or equal to the designated exposure value (e.g., in the low-light environment). In an embodiment, in a case in which the acquired exposure value exceeds the designated exposure value, when the changed zoom magnification (e.g., 4 times (4x)) falls within the first zoom magnification range (e.g., 3 times (3x) or more and 5 times (5x) or less) set to perform optical zoom through the second camera 323, and the speed at which the zoom magnification is changed is less than the threshold speed for optical zoom of the second camera 323, the processor 340 may acquire the image by performing optical zoom through the second camera 323. In a case in which the acquired exposure value is lower than or equal to the designated exposure value, even if the changed zoom magnification (e.g., 4 times (4x)) falls within the first zoom magnification range (e.g., 3 times (3x) or more and 5 times (5x) or less) set to perform optical zoom through the second camera 323 and the speed at which the zoom magnification is changed is less than the threshold speed for optical zoom of the second camera 323, the processor 340 may acquire the image by performing digital zoom through the first camera 321.

In an embodiment, in order to prevent the camera for acquiring the image from being changed frequently, when the exposure value exceeding the designated exposure value is maintained for a designated time (e.g., the time for acquiring a designated number of images (e.g., image frames)), the processor 340 may change the camera for acquiring the image from the first camera 321 to the second camera 323 to perform optical zoom through the second camera 323. For example, the processor 340 may acquire the image by performing digital zoom through the first camera 321 based on identifying that the acquired exposure value is lower than or equal to the designated exposure value. When the light environment changes to an environment where the acquired exposure value exceeds the designated exposure value, 5he processor 340 may not change the camera for acquiring the image from the first camera 321 to the second camera 323 immediately when the acquired exposure value exceeds the designated exposure value, even if a condition set to perform optical zoom through the second camera 323 is satisfied. In a case in which the exposure value exceeding the designated exposure value is continuously acquired for a designated time, when the condition set to perform optical zoom through the second camera 323 is satisfied, the processor 340 may change the camera for acquiring the image from the first camera 321 to the second camera 323.

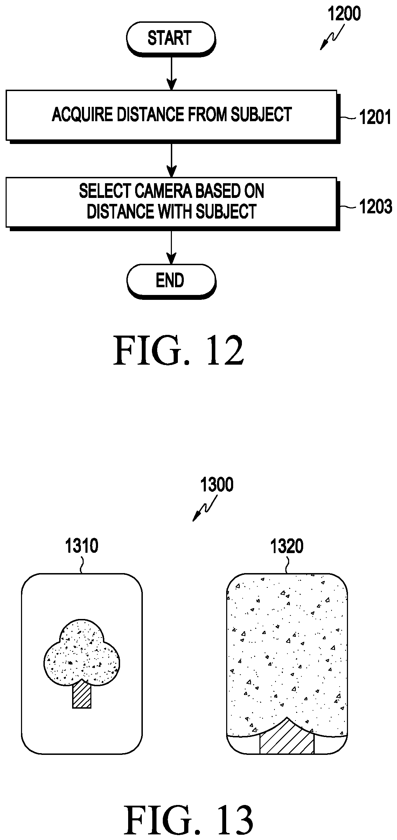

FIG. 12 is a flowchart 1200 illustrating a method of selecting a camera based on a distance from a subject according to an embodiment.

FIG. 13 is an exemplary diagram 1300 illustrating a method of selecting a camera based on a distance from a subject according to an embodiment.

In an embodiment, the operation of selecting the camera based on the distance from the subject (e.g., the distance between the camera module 320 and the subject) of FIG. 12 and FIG. 13 may be an operation included in the operation of selecting the camera based on the speed at which the zoom magnification of operation 405 of FIG. 4 is changed.

Referring to FIGS. 12 and 13, in operation 1201, in an embodiment, the processor 340 may acquire (e.g., calculate) the distance from the subject. For example, the processor 340 may acquire the distance between the camera module 320 and the subject through a range sensor. However, the method of acquiring the distance between the camera module 320 and the subject is not limited to the method of acquiring the distance through the distance sensor described above.

In operation 1203, in an embodiment, the processor 340 may select the camera for acquiring the image between the first camera 321 and the second camera 323 based on the distance from the subject.

In an embodiment, the processor 340 may select the first camera 321 having a shorter focal length than the focal length of the second camera 323 as the camera for acquiring the image, based on identifying that the distance from the subject is less than or equal to a designated distance.

In an embodiment, as the lens of the second camera 323 moves, the focal length of the lens of the second camera 323 may vary. In an embodiment, the distance from the subject and the focal length corresponding to the distance from the subject may be stored in the memory 330 in association with each other. For example, depending on the distance from the subject, the distances to the subject and the corresponding focal lengths may be stored in the memory 330 in the form of a table. In an embodiment, depending on the focal length, the distance range at which the camera module 320 can focus may vary. As the angle of view of the camera module becomes wider, the focal length may become shorter, and the minimum distance of the distance range at which the camera module 320 can focus may also become shorter.

In an embodiment, the designated distance compared to the distance from the subject may be the minimum distance at which the lens of the second camera 323 can focus (e.g., acquires a focused image).

In an embodiment, the processor 340 may select the first camera 321 as the camera for acquiring the image based on identification that the distance from the subject is less than the designated distance.

In an embodiment, even if the changed zoom magnification falls within the first zoom magnification range set to perform optical zoom through the second camera 323 and the speed at which the zoom magnification is changed is less than the designated threshold speed, the processor 340 may select the first camera 321 to acquire the image between the first camera 321 and the second camera 323 based on the identification that the distance from the subject is less than the designated distance.

In an embodiment, the processor 340 may perform the operation of selecting the camera based on the speed at which the zoom magnification of operation 405 of FIG. 4 is changed based on the identification that the distance from the subject exceeds the designated distance. For example, the processor 340 may select the camera to acquire the image between the first camera 321 and the second camera 323 based on the zoom magnification range to which the changed zoom magnification belongs and/or the speed at which the zoom magnification is changed when the distance from the subject exceeds the designated distance.

In an embodiment, in FIG. 13, when the distance from the subject exceeds the designated distance, the changed zoom magnification (e.g., 4 times (4x)) falls within the first zoom magnification range (e.g., the zoom magnification range of 3 times (3x) or more and 5 times (5x) or less) set to perform optical zoom through the second camera 323, and the speed at which the zoom magnification is changed is less than the threshold speed for optical zoom of the second camera 323, an image 1310 may be an image acquired by performing optical zoom through the second camera 323.

In an embodiment, in FIG. 13, when the distance from the subject is less than or equal to the designated distance, the changed zoom magnification (e.g., 4 times (4x)) is within the first zoom magnification range (e.g., a zoom magnification range of 3 times (3x) or more and 5 times (5x) or less) set to perform optical zoom through the second camera 323, and the speed at which the zoom magnification is changed is less than the threshold speed for optical zoom of the second camera 323, the image 1320 may be an image acquired by performing digital zoom through the first camera 321.

In an embodiment, in order to prevent the camera for acquiring the image from being changed frequently, when the distance from the subject exceeding the designated distance is maintained for a designated time (e.g., the time for acquiring a designated number of images (e.g., image frames)), the processor 340 may change the camera for acquiring the image from the first camera 321 to the second camera 323 to perform optical zoom through the second camera 323. For example, the processor 340 may acquire the image by performing digital zoom through the first camera 321 based on the identification that the distance from the subject is less than or equal to the designated distance. When the distance from the subject is changed to exceed the designated distance, the processor 340 may not change the camera for acquiring the image from the first camera 321 to the second camera 323 immediately when the distance from the subject exceeds the designated distance, even if a condition set to perform optical zoom through the second camera 323 is satisfied. When the distance from the subject exceeding the designated distance is continuously acquired for a designated period and the condition set to perform optical zoom through the second camera 323 is satisfied, the processor 340 may change the camera for acquiring the image from the first camera 321 to the second camera 323.

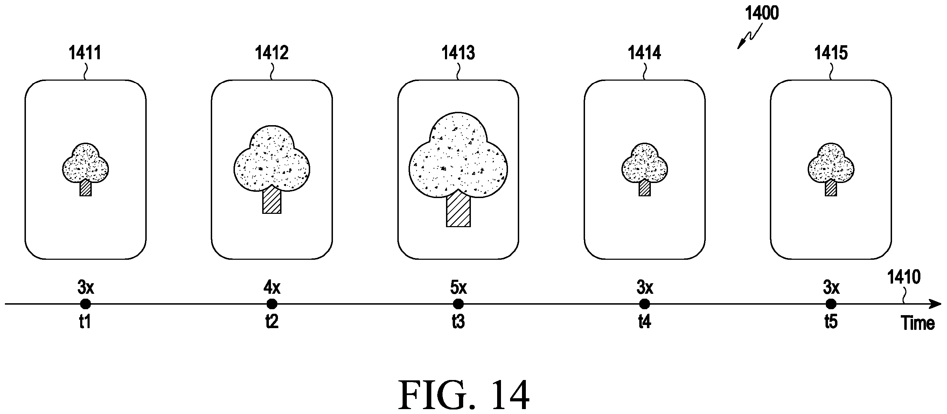

FIG. 14 is an exemplary diagram 1400 illustrating a method of providing an image according to an embodiment.

Referring to FIG. 14, in an embodiment, a line 1410 may represent a change in the zoom magnification over time (t).

In an embodiment, when the zoom magnification is changed to 3 times (3x) within the first zoom magnification range at the time (t=t1) along with an increase in the zoom magnification, the processor 340 may acquire a first image 1411 by performing optical zoom through the second camera 323.

In an embodiment, when the zoom magnification is changed to 4 times (4x) within the first zoom magnification range at the time (t=t2) along with the increase in the zoom magnification and the speed at which the zoom magnification is changed is less than the threshold speed for the optical zoom of the second camera 323, the processor 340 may acquire a second image 1412 by performing optical zoom through the second camera 323.

In an embodiment, when the zoom magnification is changed to 5 times (5x) within the first zoom magnification range at the time (t=t3) along with the increase in the zoom magnification, and the speed at which the zoom magnification is changed is less than the threshold speed for the optical zoom of the second camera 323, the processor 340 may acquire a third image 1413 by performing optical zoom through the second camera 323.

In an embodiment, when the zoom magnification is changed to 3 times (3x) within the first zoom magnification range at the time (t=t4) along with a reduction in the zoom magnification and the speed at which the zoom magnification is changed is greater than or equal to the threshold speed for the optical zoom of the second camera 323, the processor 340 may acquire a fourth image 1414 by performing digital zoom through the first camera 321.

In an embodiment, when the zoom magnification is maintained at 3 times (3x), which is within the first zoom magnification range, at the time (t=t5) as the zoom magnification is not changed, the processor 340 may acquire a fifth image 1415 by performing optical zoom through the second camera 323. In an embodiment, the time (t=t5) for acquiring the image 1415 by performing optical zoom through the second camera 323 may be the time required to acquire the designated number of images (e.g., image frames) after the zoom magnification is changed to 3 times (3x) at the time (t=t4) and the lens of the second camera 323 is moved to the position corresponding to 3 times (3x) the zoom magnification.

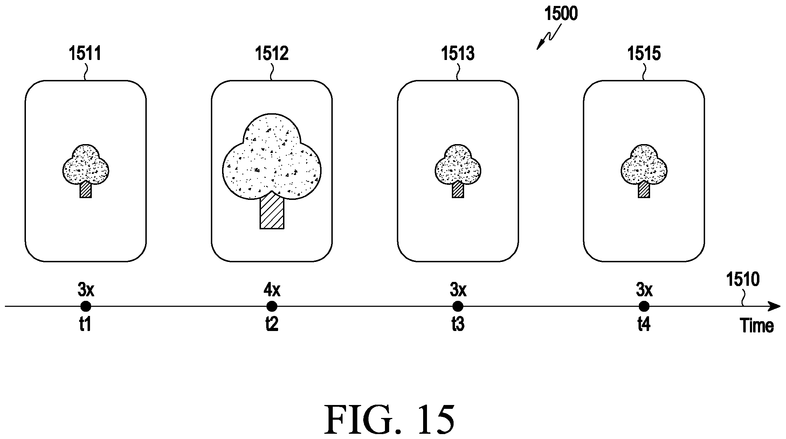

FIG. 15 is an exemplary 1500 illustrating a method of providing an image according to an embodiment.

Referring to FIG. 15, in an embodiment, a line 1510 may represent a change in zoom magnification over time (t).

In an embodiment, when the zoom magnification is changed to 3 times (3x) within the first zoom magnification range at time (t=t1) along with an increase in the zoom magnification, the processor 340 may acquire a first image 1511 by performing optical zoom through the second camera 323.

In an embodiment, when the zoom magnification is changed to 4 times (4x), which is within the first zoom magnification range, at the time (t=t2) along with the increase in the zoom magnification and the speed at which the zoom magnification is changed is greater than or equal to the threshold speed for the optical zoom of the second camera 323, the processor 340 may acquire a second image 1512 by performing digital zoom through the first camera 321.

In an embodiment, when the zoom ratio is changed to 3 times (3x), which is within the first zoom magnification range, at the time (t=t3) along with a reduction in the zoom magnification and the speed at which the zoom magnification is changed is greater than or equal to the threshold speed for the optical zoom of the second camera 323, the processor 340 may acquire a third image 1513 by performing digital zoom through the first camera 321.

In an embodiment, when the zoom magnification is maintained at 3 times (3x), which is within the first zoom magnification range, at time (t=t4) as the zoom magnification is not changed, the processor 340 may acquire a fourth image 1515 by performing optical zoom through the second camera 323. In an embodiment, the time (t=t4) for acquiring the image 1515 by performing optical zoom through the second camera 323 may be the time required to acquire a designated number of images (e.g., image frames) after the zoom magnification is changed to 3 times (3x) at the time (t=t3) and the lens of the second camera 323 is moved to a position corresponding to 3 times (3x) the zoom magnification.

In an embodiment, a method of providing an image by the electronic device 101 may include changing a zoom magnification based on a user input. The method may include identifying whether the changed zoom magnification falls within a zoom magnification range set to perform optical zoom through a second camera 323 supporting an optical zoom. The method may include selecting, based on a speed at which the zoom magnification is changed, a camera for acquiring an image between a first camera 321 and the second camera 323, based on identifying that the changed zoom magnification falls within the zoom magnification range. The method may include displaying the image acquired through the selected camera through a display module 310 of the electronic device 101.

In an embodiment, a focal length of the second camera 323 may be longer than a focal length of the first camera 321, and the second camera 323 may include a lens that adjusts the focal length of the second camera.

In an embodiment, the selecting of the camera for acquiring the image between the first camera 321 and the second camera 323 may include determining the speed at which the zoom magnification is changed, identifying whether the speed at which the zoom magnification is changed is greater than or equal to a threshold speed for optical zoom of the second camera 323 based on identifying that the changed zoom magnification falls within the zoom magnification range, selecting the first camera 321 between the first camera 321 and the second camera 323 as the camera for acquiring the image based on identifying that the speed at which the zoom magnification is changed is greater than or equal to the threshold speed, and selecting the second camera 323 between the first camera 321 and the second camera 323 as the camera for acquiring the image based on identifying that the speed at which the zoom magnification is changed is less than the threshold speed.

In an embodiment, the threshold speed for an optical zoom of the second camera 323 may be determined based on a movement speed of the lens.

In an embodiment, the method may further include changing the camera for acquiring the image from the first camera 321 to the second camera 323 in order to perform optical zoom through the second camera 323 when the lens is moved to a position corresponding to the changed zoom magnification while performing digital zoom through the first camera 321 at the changed zoom magnification.

In an embodiment, the changing of the camera for acquiring the image from the first camera 321 to the second camera 323 may include changing the camera for acquiring the image from the first camera 321 to the second camera 323 when the lens is moved to the position corresponding to the changed zoom magnification and the changed zoom magnification is maintained for a designated time while performing digital zoom through the first camera 321 at the changed zoom magnification.

In an embodiment, the selecting of the camera for acquiring the image between the first camera 321 and the second camera 323 may include determining a first time required for the second camera 323 to perform the optical zoom based on the speed at which the zoom magnification is changed, based on the identification that the changed zoom magnification is within the zoom magnification range, identifying whether the first time exceeds a period designated to display an image through the display module 310, selecting the first camera 321 between the first camera 321 and the second camera 323 as the camera for acquiring the image based on the identification that the first time exceeds the period, and selecting the second camera 323 between the first camera 321 and the second camera 323 as the camera for acquiring the image based on the identification that the first time is less than or equal to the period.

In an embodiment, the selecting of the camera for acquiring the image between the first camera 321 and the second camera 323 may include acquiring an exposure value, and selecting the first camera 321 between the first camera 321 and the second camera 323 as the camera for acquiring the image when the exposure value is less than or equal to a designated exposure value.

In an embodiment, the selecting of the camera for acquiring the image between the first camera 321 and the second camera 323 may include acquiring a distance between the electronic device 101 and a subject, and selecting the first camera 321 between the first camera 321 and the second camera 323 as the camera for acquiring the image when the distance is less than or equal to a minimum focal length of the lens of the second camera 323.

In an embodiment, the displaying of the image acquired through the selected camera may include acquiring a first image by cropping the image acquired through the first camera 321 when the first camera 321 is selected between the first camera 321 and the second camera 323, and acquiring a second image by performing the optical zoom through the second camera 323 when the second camera 323 is selected between the first camera 321 and the second camera 323.

In addition, the structure of data used in the embodiments of the present document described above may be recorded on a computer-readable recording medium through various means. The computer-readable recording medium includes a storage medium such as a magnetic storage medium (e.g., ROM, floppy disk, hard disk, etc.) and an optical reading medium (e.g., CD-ROM, DVD, etc.).

## Claims

1. An electronic device (101) comprising:
a first camera (321);
a second camera (323) supporting an optical zoom;
a display module (310); and
at least one processor (340) operatively connected to the first camera (321), the second camera (323), and the display module (310),
wherein the at least one processor (340) is configured to:
based on a user input, change a zoom magnification;
identify whether the changed zoom magnification falls within a zoom magnification range set to perform an optical zoom through the second camera (323);
based on the identifying that the changed zoom magnification falls within the zoom magnification range, select, based on a speed at which the zoom magnification is changed, a camera for acquiring an image between the first camera (321) and the second camera (323); and
display the image acquired through the selected camera through the display module (310).

2. The electronic device (101) of claim 1, wherein a focal length of the second camera (323) is longer than a focal length of the first camera (321), and the second camera (323) comprises a lens configured to adjust the focal length of the second camera.

3. The electronic device (101) of claim 1 or claim 2, wherein the at least one processor (340) is configured to:
determine the speed at which the zoom magnification is changed;
based on the identification that the changed zoom magnification falls within the zoom magnification range, identify whether the speed at which the zoom magnification is changed is greater than or equal to a threshold speed for optical zoom of the second camera (323);
based on identifying that the speed at which the zoom magnification is changed is greater than or equal to the threshold speed, select the first camera (321) between the first camera (321) and the second camera (323) as the camera for acquiring the image; and
based on identifying that the speed at which the zoom magnification is changed is less than the threshold speed, select the second camera (323) between the first camera (321) and the second camera (323) as the camera for acquiring the image.

4. The electronic device (101) of any one of claim 1 to claim 3, wherein the threshold speed for the optical zoom of the second camera (323) is determined based on a movement speed of the lens.

5. The electronic device (101) of any one of claim 1 to claim 4, wherein the at least one processor (340) is configured to, based on the lens being moved to a position corresponding to the changed zoom magnification while performing a digital zoom through the first camera (321) at the changed zoom magnification, change the camera for acquiring the image from the first camera (321) to the second camera (323) in order to perform optical zoom through the second camera (323).

6. The electronic device (101) of any one of claim 1 to claim 5, wherein the at least one processor (340) is configured to, based on the lens being moved to the position corresponding to the changed zoom magnification and the changed zoom magnification being maintained for a designated time while performing the digital zoom through the first camera (321) at the changed zoom magnification, change the camera for acquiring the image from the first camera (321) to the second camera (323).

7. The electronic device (101) of any one of claim 1 to claim 6, wherein the at least one processor (340) is configured to:
based on identifying that the changed zoom magnification is within the zoom magnification range, determine, based on the speed at which the zoom magnification is changed, a first time required for the second camera (323) to perform the optical zoom;
identify whether the first time exceeds a period designated to display one image through the display module (310);
based on the identifying that the first time exceeds the period, select the first camera (321) between the first camera (321) and the second camera (323) as the camera for acquiring the image; and
based on identifying that the first time is less than or equal to the period, select the second camera (323) between the first camera (321) and the second camera (323) as the camera for acquiring the image.

8. The electronic device (101) of any one of claim 1 to claim 7, wherein the at least one processor (340) is configured to:
acquire an exposure value; and
based on the exposure value being less than or equal to a designated exposure value, select the first camera (321) between the first camera (321) and the second camera (323) as the camera for acquiring the image.

9. The electronic device (101) of any one of claim 1 to claim 8, wherein the at least one processor (340) is configured to:
acquire a distance between the electronic device (101) and a subject; and
based on the distance being less than or equal to a minimum focal length of the lens of the second camera (323), select the first camera (321) between the first camera (321) and the second camera (323) as the camera for acquiring the image.

10. The electronic device (101) of any one of claim 1 to claim 9, wherein the at least one processor (340) is configured to:
based on the first camera (321) being selected between the first camera (321) and the second camera (323), acquire a first image by cropping the image acquired through the first camera (321); and
based on the second camera (323) being selected between the first camera (321) and the second camera (323), acquire a second image by performing the optical zoom through the second camera (323).

11. A method of providing an image by an electronic device (101), the method comprising:
based on a user input, changing a zoom magnification;
identifying whether the changed zoom magnification falls within a zoom magnification range set to perform an optical zoom through a second camera (323) supporting optical zoom;
based on the identifying that the changed zoom magnification falls within the zoom magnification range, selecting, based on a speed at which the zoom magnification is changed, a camera for acquiring an image between a first camera (321) and the second camera (323); and
displaying the image acquired through the selected camera through a display module (310) of the electronic device (101).

12. The method of claim 11, wherein a focal length of the second camera (323) is longer than a focal length of the first camera (321), and the second camera (323) comprises a lens configured to adjust the focal length of the second camera.

13. The method of claim 11 or claim 12, wherein the selecting of the camera for acquiring the image between the first camera (321) and the second camera (323) comprises:
determining the speed at which the zoom magnification is changed;
based on the identification that the changed zoom magnification falls within the zoom magnification range, identifying whether the speed at which the zoom magnification is changed is greater than or equal to a threshold speed for optical zoom of the second camera (323);
based on identifying that the speed at which the zoom magnification is changed is greater than or equal to the threshold speed, selecting the first camera (321) between the first camera (321) and the second camera (323) as the camera for acquiring the image; and
based on identifying that the speed at which the zoom magnification is changed is less than the threshold speed, selecting the second camera (323) between the first camera (321) and the second camera (323) as the camera for acquiring the image.

14. The method of any one of claim 11 to claim 13, wherein the threshold speed for the optical zoom of the second camera (323) is determined based on a movement speed of the lens.

15. The method of any one of claim 11 to claim 14, further comprising:
based on the lens being moved to a position corresponding to the changed zoom magnification while performing a digital zoom through the first camera (321) at the changed zoom magnification, changing the camera for acquiring the image from the first camera (321) to the second camera (323) in order to perform optical zoom through the second camera (323).
